# EUROPEAN PATENT SPECIFICATION

(11) **EP 1 205 853 B1**
(45) Date of publication and mention of the grant of the patent: **22.11.2006**
(21) Application number: 01122710.5
(22) Date of filing: 21.09.2001
(51) Int. Cl.: G06F 17/30

(54) **Reduced lock contention in SQL transactions**
Reduzierung von Ausschlusskonflikten in SQL-Transaktionen
Réduction des conflits d'accès dans les transactions SQL

(30) Priority: 08.11.2000 EP 00124197
(43) Date of publication of application: 15.05.2002
(73) Proprietor: International Business Machines Corporation, Armonk, NY 10504 (US)
(72) Inventor: Hrle, Namik, 71032 Boeblingen (DE); Maier, Andreas, 70597 Stuttgart (DE); Teng, James, San Jose, CA 95120 (US); Watts, Julie, Morgan Hill, CA 95037 (US)
(74) Representative: Klein, Hans-Jörg

(56) References cited:
- US-A- 5 842 196
- US-A- 6 047 285

## Description

### Field of the invention

The invention relates to a method for reducing lock contention of concurrent SQL transactions on the rows of a table in a relational data base system which use committed read isolation levels to produce result sets in response of SQL statements. The inventions also relates to a corresponding apparatus and a corresponding program product.

### Background of the invention

The rules that influence SQL result set creation semantics are defined in the SQL standard (ANSI Document X3.135-1986, "Database Language SQL, American Standards Institute, New York, 1986; ISO Document ISO/TC 97/SC, 21/WG 3, N 117). These rules comprise locking isolation levels which determine when an application program can retrieve data during a transaction. In general, the rules specify whether the result set consists of the committed rows only or whether it can include the rows that were uncommitted at the time of result set creation. Typical examples of the former are Cursor Stability (CS) and Read Stability (RS), and for the later Uncommitted Read (UR).

US 5983225 discloses parameterized lock management in a relational database with concurrent transactions.

Many applications require committed read semantics which inevitably comes with the price of increased locking contention. In order to return a committed row the transaction might need to acquire a lock on it that is incompatible with locks requested by other concurrent transactions. With the known locking semantics the committed read transactions might request and hold locks even on the rows that do not qualify for the result set by means of the statement predicates. Apart from the overhead of acquiring and releasing these seemingly unnecessary locks this behavior increases the number of lock request suspensions and in some cases results in deadlocks and abnormal transaction terminations.

### Summary of the invention

It is an object of the invention to improve the throughput of SQL transactions.

In particular, it is an object of the invention to reduce lock contention in SQL operations that require committed read semantics.

It is a further object of the invention to reduce deadlock situations in SQL transactions.

According to the invention, as defined in the claims, a scan is performed by accessing the rows of the table with uncommitted read semantics irrespective of current locks. Each row is checked whether it qualifies the predicates of the statement and the scan is continued if the row does not qualify the predicates of the statement. A lock is requested if the row qualifies the predicates of the statement, and the scan is suspended if the lock is refused. The request is repeated and the row is re-examined after the lock is permitted. If the row still qualifies the predicates of the select statement, it is returned as part of the result set. If the row no longer qualifies the predicates of the statement, the lock is released, the row is skipped and the scan is continued.

The locking semantics according to the invention has the advantage that it completely removes the problem of lock contention on the rows that do not qualify statement predicates. The improved semantics of forming the result set is more strict than the Uncommitted Read (UR) mode because it returns only committed rows, but is less strict than Cursor Stability (CS) and Read Stability (RS) because in some special cases the rows that would be returned by CS and RS as committed would not be part of the result set.

### Brief description of the drawings

In the following an implementation of the invention is described with reference to drawings which show:
- Figure 1: an example of the access to a table using the conventional read semantic rules;
- Figure 2: the example from figure 1 by the use of read semantic rules according to the invention;
- Figure 3: a schematic block diagram of a data base management system including apparatus using an implementation of the invention; and
- Figure 4: a flow diagram of an implementation of a method according to the invention.

### Detailed description of preferred embodiments of the invention

The embodiment of the invention described herein relate to a relational database operated by a database management system DBMS by using the well known Structured Query Language called SQL. The DBMS supports a plurality of application programs which may simultaneously request access to the database. It is one of the functions of the DBMS to coordinate transactions initiated by the application programs, and to avoid interferences between them. The access to the data base is performed by using the SQL Standards which provide a variety of statements including search conditions or predicates which allow to define certain data items in the database. One of these statements is the Select Statement which produces a result set of data according to the search conditions or predicates.

The invention introduces improved semantics to create result sets in response to queries directed to the relational database by the use of access statements as defined in the SQL Standards. By the improved semantics access to a table of the database is performed by a scan of all rows of the table irrespective of existing locks and by a return of committed rows only which fulfill the query predicates. Herein 'all' means both committed and uncommitted rows and does not imply that the entire table needs to be scanned. This still depends on the selected access path and is transparent to the new semantics.

The algorithm that describes the improved semantics comprise the following rules:
- The rows of a table are scanned with uncommitted read semantics.
- If a row does not qualify the predicates, it is skipped and the scan is continued, else an appropriate lock is requested.
- If the lock is refused, the scan is suspended. Else, or after resuming (i.e. after the suspension is lifted), re-examine the row.
- If the row no longer qualifies, the lock is released, the row is skipped and the scan is continued, else the row is returned as part of the result set and the scan is continued.

All rows of the result set are committed rows. Locks on rows that do not qualify the predicates are neither requested not acquired which eliminates the situations where the lock requester waits for a lock on the row that is not needed at all and avoids situations where the lock holder blocks other transactions by holding a lock on the row that is not part of holder's result set.

The result sets created by the existing semantical rules and the semantical rules according to the invention are in most cases the same. There is one exception which is demonstrated by the following sequence of events.

The scan needs to visit a number of rows and it starts scanning at the time when a row R, that yet needs to be scanned, qualifies the predicates. Before the scan reaches row R another transaction changes its contents so that row R does no longer qualify the predicates used by the scan. This row updating transaction has not yet committed. At this point of time the scan comes to row R and skips it because it does not qualify the predicates used by the scan. Thereafter, for some reason, the updating transaction backs out the changes to row R so that it would now qualify the predicates used by the scan. The row R would thus not be part of the result set that is created by the scan although it qualifies the predicates.

In general, the new semantics provide the same rules for the result set creation as the known isolation level semantics including the Cursor Stability mode or the Read Stability mode, with the exception of the special case described above. There are many applications that can tolerate these exeption for the benefit of significantly reduced lock contention.

An appropriate implementation of the new semantics is a modification of the known committed read isolation levels because it does not change their 'repeatability' attribute, but the way the result set is constructed.

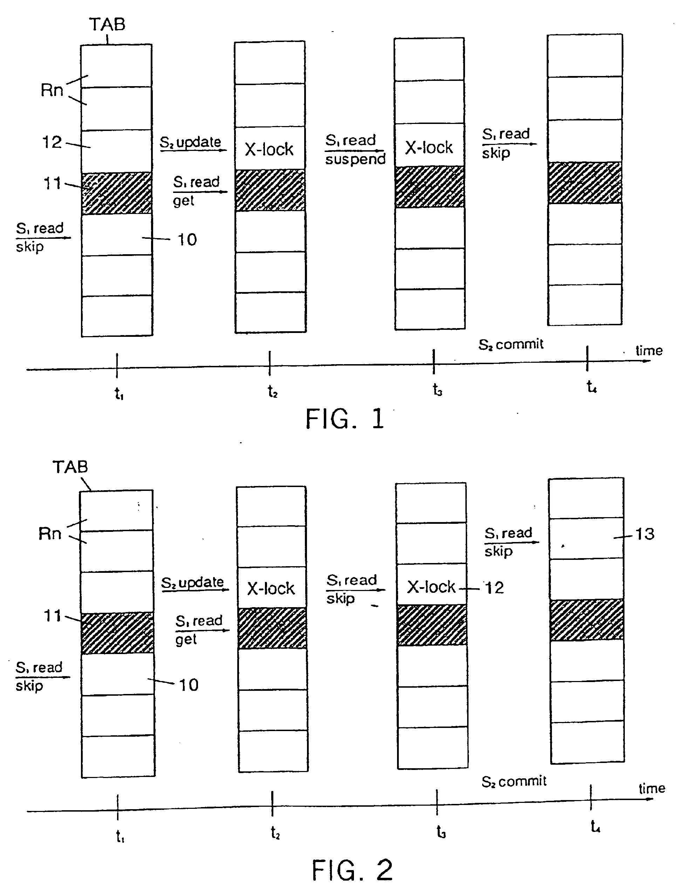

Figures 1 and 2 demonstrate in general the differences between the conventional semantics and the semantics according to the invention. The figures show a table TAB which comprises a number of rows Rn and which is accessed by two statements S1 and S2. For a given range, only row 11 qualifies the predicates of statement S1. Figure 1 represents the access to TAB by using the conventional semantics. At time t1 statement S1 reads row 10 adjacent to row 11 and skips it because it does not qualify. At time t2 statement S1 reads the next row, which is row 11, and retrieves it because it qualifies. At the same time statement S2 updates the subsequent row 12 and holds an exclusive lock on this row. At time t3 statement S1 comes to row 12 that is held by statement S2 and thus gets suspended. S1 waits then for S2 to release the lock, even though row 12 does not qualify. At time t4 statement S2 commits and releases the exclusive lock on row 12. Statement S1 then reads row 12 and skips it because it does not qualify.

Figure 2 represents the scanning with locking semantics according to the invention. The operation at times t1 and t2 is the same as shown in figure 1. A difference can be noted at time t3 when Statement S1 reaches row 12 that is held by statement S2 but it does not not get suspended. Statement S1 reads through the exclusive lock held by statement S2 and finds that the row does not qualify and skips it. At time 4 statement S1 is already further in the table by reading row 13. The result set produced by statement S1 is the same as in the conventional semantics, but without locking overhead and contention.

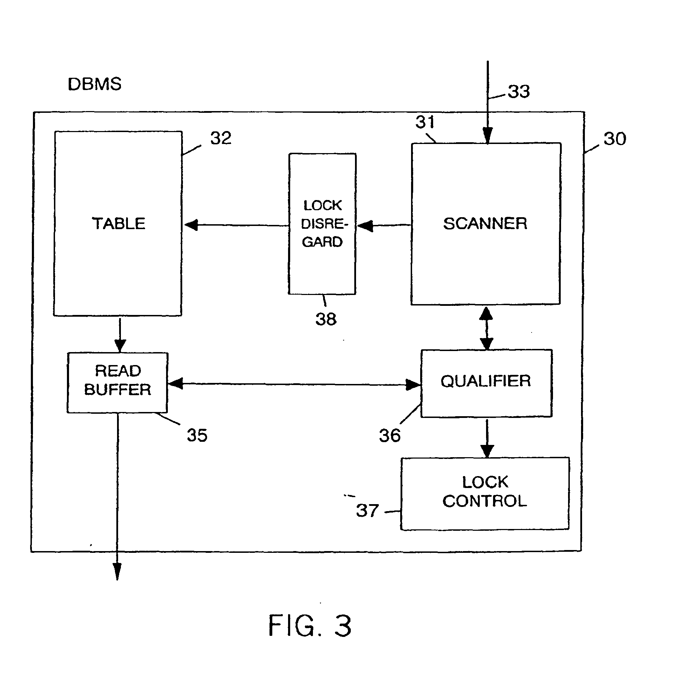

Figure 3 shows an implementation of the invention in a database management system (DBMS) 30 which comprises a scanner 31 and a system of tables 32. The scanner receives select statements via line 33 and scans the rows of at least one of the tables 32. A read buffer 35 at the output of the table storage is connected to a qualifying checker 36 which determines whether a row read within the scan operation qualifies the predicates of the SQL statement received on line 35. A lock control device 37 receives an input from the qualifying checker 36 if the later determines that the row qualifies the predicates. The lock control device 37 also receives inputs from other components, not shown in figure 3. The scanner 32 is connected to a lock device 38 which disregards pending locks held by other access statements and which permits a read through such locks during the scan of the table 32 as described above with reference to figure 2.

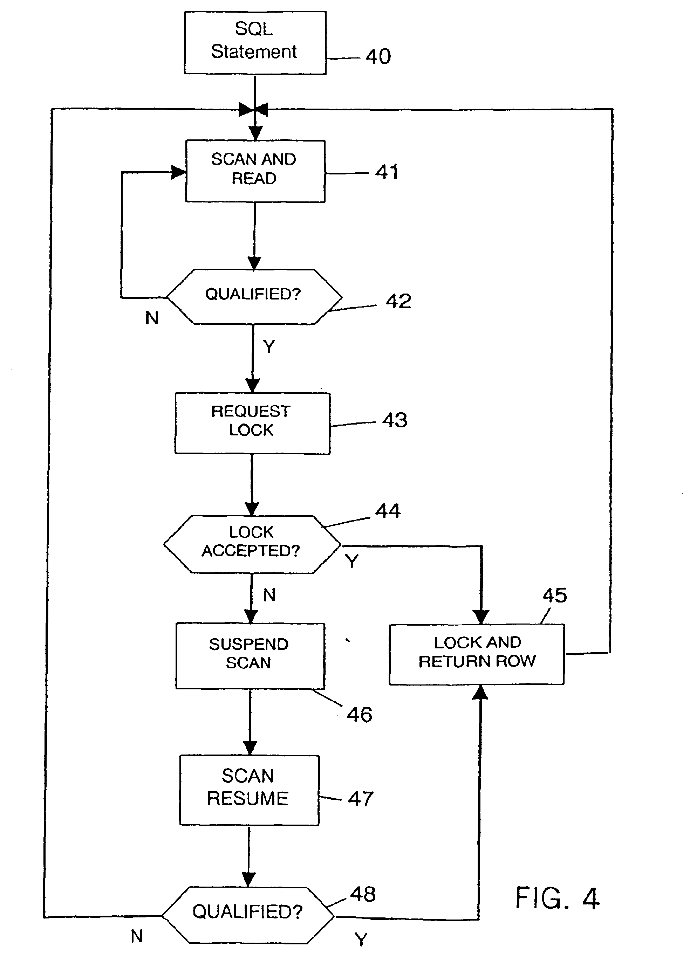

Figure 4 represents the steps of a method to implement the algorithm described above. In step 40 an SQL statement is issued which initiates by step 41 a read scan in a table such as table 32 in figure 32. This scan may be performed within an access range determined by the statement. During the scan each row of the table is read and evaluated in step 42 whether it fulfils the search conditions of the select statement. In case that it does not qualify the search conditions, the row is skipped and step 41 is repeated to continue the scan by reading the next row. If the row qualifies the search conditions, step 43 requests a lock. If step 44 determines that the lock is accepted, step 45 returns the row as a part of the result set of the scan and the scan continues with the next row until the end of the scan range. Step 46 suspends the scan if the lock is not accepted which means that a non- compatible lock of another statement is encountered. Subsequently, in step 47 the blocking lock is released and the scan is resumed. Step 48 evaluates the same row again. If the row still qualifies the statement predicates, the step 45 will be performed to return the row as a part of the result set. If the row no longer qualifies the predicates, it is skipped and step 41 is repeated to continue the scan.

The method steps described by reference to figure 4 may be implemented in a program product which is stored on a machine readable data carrier or transmitted through a digital data network.

### Example 1

Subsequently, examples are described which show the similarities and the differences of the current isolation level semantics and the semantics according to the invention. The examples use the following table TAB:

| Rows | Column C1 | Column C2 |
|---|---|---|
| Row 1 | 3 | A |
| Row 2 | 5 | B |
| Row 3 | 10 | C |

In order to avoid complexity of considering different access paths (which is irrelevant for the presented examples) it is assumed that all rows need to be examined, i.e. either the statements below use tablespace scan, or use an index and ended up with the three rows to examine without further index usage.

There are two transactions, TRAN1 and TRAN2 that hold locks on TAB. The locks are acquired via the following statements:
Tran1: UPDATE TAB SET C2=P WHERE C1=3
   The result of this statement is an exclusive lock on row1.
Tran2: UPDATE TAB SET C2=Y WHERE C1=10
   The result of this statement is an exclusive lock on row3.
Tran3: SELECT ... FROM TAB WHERE C1=10 AND C2=Y
   TRAN3 accesses TAB by using the known committed read isolation levels semantics. The scan starts by a request of a shared lock on row1 and gets suspended since at that time row1 is exclusively locked.

Once the transaction TRAN1 commits, the shared lock on row1 will be granted to TRAN3. After evaluating the predicates the row will be rejected, but the lock might stay depending on the isolation level and internal database system implementation. The scan continues in the same fashion and reaches row3. A shared lock is requested and the transaction gets suspended. Whether or not row3 gets included in the result set depends on TRAN2 completion. If TRAN2 commits, row3 is in the result set. If it backs out, row3 is not in the result set.

The behavior of TRAN3 is different, if the new semantics is used. The scan starts and rejects rowl and row2 without locking since they do not fulfil the predicates of the Select statement. The scan avoids overhead of acquiring locks on non-qualifying rows, transaction wait due to the lock suspension, potential timeout or deadlock as well as unnecessary locks that stay behind. When the scan reaches row3, TRAN2 already has changed column C2 of this row from 'C' to 'Y'. Thus, row 3 qualifies the predicates of the select statement in TRAN3 so that a shared lock is requested and the transaction gets suspended. After TRAN2 completes, by commit or by backout, the predicates are re-examined. Whether or not row3 gets included in the result set depends on TRAN2 completion. If it commits, row3 is in the result set. If it backs out, row3 is not in the result set. Note that there are no differences in the result sets between the current isolation level semantics and the semantics according to the invention.

### Example 2

This example relates to the same table TAB. It demonstrates the case where the current isolation level semantics and the semantics according to the invention generate different result sets. The table TAB and the transactions TRAN1 (holding an exclusive lock on rowl) and TRAN2 (holding an exclusive lock on row3) are the same.

TRAN3 accesses TAB via the statement:
SELECT ... FROM TAB WHERE C1=10 AND C2=C

TRAN3 uses the existing committed read isolation levels semantics. The scan starts, requests a shared lock on row1 and gets suspended. Once the transaction TRAN1 commits, the shared lock on row1 will be granted to TRAN3. After an evaluation of the predicates the row will be rejected, but the lock might stay depending on the isolation level and internal database system implementation. The scan continues in the same fashion and reaches row3. A shared lock is requested and the transaction gets suspended. Whether or not row3 gets included in the result set depends on TRAN2 completion. If TRAN2 commits, row3 is not in the result set. If it backs out, row3 is in the result set.

In the following the behavior of TRAN3 is considered if the semantics according to the invention is used. The scan starts and rejects row1 and row2 without locking since they do not qualify the Select statement. As in example 1, the locking overhead and contention are avoided. If the scan reaches row3, this row does not qualify (it currently has values C1=10 and C2=Y). Regardless of whether TRAN2 later commits or backs out, the row3 is not included in the result set.

While the invention is described with reference to preferred embodiments of the invention, modifications or other implementations of the invention are within the scope of the invention as defined in the claims.

## Claims

1. A method for reducing lock contention of concurrent SQL transactions on the rows of a table in a relational data base system which uses committed read isolation levels to produce result sets in response of an SQL statement having a set of predicates, comprising the steps of:
scanning all rows of the table within an access range determined by the statement (41), and return committed rows which qualify the predicates of the statement,
**characterised by** the step of evaluating each scanned row irrespective whether it has a committed or uncommitted status and disregarding a pending lock.

2. A method according to claim 1, comprising the steps of:
scan the table by accessing the rows of the table with uncommitted read semantics irrespective of current locks (41) ;
evaluate each row whether it qualifies the predicates of the select statement (42) and continuing the scan if the row does not qualify the predicates of the statement;
request a lock if the row qualifies the predicates of the select statement (43);
suspend the scan, if a lock is refused (46);
repeat the request of a lock and re-evaluate the row if the lock is permitted (47, 48);
if the row still qualifies the predicates of the statement, return it as result set (45), and if it no longer qualifies the predicates of the select statement, release the lock, skip the row and continue the scan.

3. An apparatus for reducing lock contention of concurrent SQL transactions on the rows of a table (32) in a relational data base system (30) which uses committed read isolation levels to produce result sets in response of an SQL statement having a set of predicates, comprising:
means (31) for scanning all rows of the table (32) within an access range determined by the statement, and means (35) for returning committed rows only which qualifies the predicates of the statement;
**characterised by** means (38) for evaluating each scanned row irrespective of whether it has a committed or uncommitted status and disregarding a pending lock.

4. An apparatus according to claim 3, comprising
means (31) for scanning the table by accessing the rows of the table (32) with uncommitted read semantics irrespective of current locks;
means (36, 41) for evaluating each row whether it qualifies the predicates of the statement and for continuing the scan if the row does not qualify the predicates of the statement;
means (43) for requesting a lock if the row qualifies the predicates of the statement;
means for suspending (44, 46) the scan, if a lock is refused, and for repeating the request of an lock and re-examining the row after the lock is permitted;
means (35, 45) for returning the row as result set, if the row still qualifies the predicates of the statement, and means for releasing the lock, skipping the row and continuing the scan, if the row no longer qualifies the predicates of the select statement.

5. A program product stored on a machine readable data carrier for reducing lock contention of concurrent SQL transactions on the rows of a table (32) in a relational data base system (30) which uses committed read isolation levels to produce result sets in response of an SQL statement, comprising the steps of:
scanning all rows of the table within an access range determined by the statement (41), return committed rows which qualifies the predicates of the statement;
**characterised by** the step of evaluating each scanned row irrespective of whether it has a committed or uncommitted status and disregarding a pending lock.

6. A program product according to claim 5, comprising the steps of:
scan the table by accessing the rows of the table with uncommitted read semantics irrespective of current locks (41);
evaluate each row whether it qualifies the predicates of the select statement and continuing scanning if the row does not qualify the predicates of the statement (42);
request a lock if the row qualifies the predicates of the select statement (43);
suspend the scan, if a lock is refused (46);
repeat the request of a lock and re-evaluate the row if the lock is permitted (48); and
if the row still qualifies the predicates of the statement, return it as result set (45), and if it no longer qualifies the predicates of the select statement, release the lock, skip the row and continue the scan.

## Patentansprüche

1. Verfahren zur Reduzierung von Ausschlusskonflikten in simultanen SQL-Transaktionen bei den Zeilen einer Tabelle in einem relationalen Datenbanksystem, das zur Erzeugung von Ergebnisgruppen als Reaktion auf eine SQL-Anweisung mit einem Satz von Prädikaten Isolationsstufen für festgeschriebene Leseoperationen verwendet, wobei das Verfahren die folgenden Schritte umfasst:
Durchsuchen (41) aller Zeilen der Tabelle innerhalb eines durch die Anweisung festgelegten Zugriffsbereichs und
Zurückgeben von festgeschriebenen Zeilen, auf welche die Prädikate der Anweisung zutreffen,
**gekennzeichnet durch** den Schritt der Bewertung jeder durchsuchten Zeile unabhängig davon, ob sie einen Status festgeschrieben oder nicht festgeschrieben aufweist, und unter Außerachtlassung einer anstehenden Sperrung.

2. Verfahren nach Anspruch 1, welches die folgenden Schritte umfasst:
Durchsuchen der Tabelle (41) durch Zugreifen auf die Zeilen der Tabelle mit Hilfe einer Semantik für nicht festgeschriebene Leseoperationen unter Außerachtlassung aktueller Sperrungen;
Bewerten jeder Zeile (42) dahingehend, ob die Prädikate der Auswahlanweisung auf die Zeile zutreffen, und Fortsetzen der Suche, wenn die Prädikate der Anweisung nicht auf die Zeile zutreffen;
Anfordern einer Sperrung (43), wenn die Prädikate der Auswahlanweisung auf die Zeile zutreffen;
Unterbrechen der Suche (46), wenn eine Sperrung verweigert wird;
Wiederholen der Anforderung einer Sperrung und wiederholtes Bewerten der Zeile (47, 48), wenn die Sperrung zugelassen wird;
Zurückgeben der Zeile als Bestandteil der Ergebnisgruppe (45), wenn die Prädikate der Anweisung immer noch auf die Zeile zutreffen, sowie Aufheben der Sperrung, Überspringen der Zeile und Fortsetzen der Suche, wenn die Prädikate der Auswahlanweisung nicht mehr auf die Zeile zutreffen.

3. Vorrichtung zur Reduzierung von Anschlusskonflikten in simultanen SQL-Transaktionen bei den Zeilen einer Tabelle (32) in einem relationalen Datenbanksystem (30), das Isolationsstufen für festgeschriebene Leseoperationen zur Erzeugung von Ergebnisgruppen als Reaktion auf eine SQL-Anweisung mit einem Satz von Prädikaten verwendet, wobei die Vorrichtung Folgendes umfasst:
Mittel (31) zum Durchsuchen aller Zeilen der Tabelle (32) innerhalb eines durch die Anweisung festgelegten Zugriffsbereichs und Mittel (35) zum Zurückgeben von festgeschriebenen Zeilen nur dann, wenn die Prädikate der Anweisung auf die Zeilen zutreffen;
**gekennzeichnet durch** Mittel (38) zum Bewerten jeder durchsuchten Zeile unabhängig davon, ob sie den Status festgeschrieben oder nicht festgeschrieben aufweist, und unter Außerachtlassung einer anstehenden Sperrung.

4. Vorrichtung nach Anspruch 3, welche Folgendes umfasst:
Mittel (31) zum Durchsuchen der Tabelle durch Zugreifen auf die Zeilen der Tabelle (32) mit Hilfe einer Semantik für nicht festgeschriebene Leseoperationen unter Außerachtlassung aktueller Sperrungen;
Mittel (36, 41) zum Bewerten jeder Zeile dahingehend, ob die Prädikate der Anweisung auf die Zeile zutreffen, und zum Fortsetzen der Suche, wenn die Prädikate der Anweisung nicht auf die zeile zutreffen;
Mittel (43) zum Anfordern einer Sperrung, wenn die Prädikate der Anweisung auf die Zeile zutreffen;
Mittel zum Unterbrechen (44, 46) der Suche, wenn eine Sperrung verweigert wird, und zum Wiederholen der Anforderung einer Sperrung und zur erneuten Prüfung der Zeile, nachdem die Sperrung zugelassen wurde;
Mittel (35, 45) zum Zurückgeben der Zeile als Ergebnisgruppe, wenn die Prädikate der Anwendung noch auf die Zeile zutreffen, und Mittel zum Aufheben der Sperrung, Überspringen der Zeile und Fortsetzen der Suche, wenn die Prädikate der Auswahlanweisung nicht mehr der Zeile entsprechen.

5. Programmprodukt, das auf einem maschinenlesbaren Datenträger gespeichert ist, zur Reduzierung von Anschlusskonflikten in simultanen SQL-Transaktionen bei den Zeilen einer Tabelle (32) in einem relationalen Datenbanksystem (30), das Isolationsstufen für festgeschriebene Leseoperationen zur Erzeugung von Ergebnisgruppen als Reaktion auf eine SQL-Anweisung verwendet, wobei das Programmprodukt die folgenden Schritte umfasst:
Durchsuchen (41) aller Zeilen der Tabelle innerhalb eines durch die Anweisung festgelegten Zugriffsbereichs,
Zurückgeben von festgeschriebenen Zeilen, auf welche die Prädikate der Anweisung zutreffen;
**gekennzeichnet durch** den Schritt der Bewertung jeder durchsuchten Zeile unabhängig davon, ob sie einen Status festgeschrieben oder nicht festgeschrieben aufweist, und unter Außerachtlassung einer aktuellen Sperrung.

6. Programmprodukt nach Anspruch 5, welches die folgenden Schritte umfasst:
Durchsuchen (41) der Tabelle durch Zugreifen auf die Zeilen der Tabelle mit Hilfe einer Semantik für nicht festgeschriebene Leseoperationen unter Außerachtlassung aktueller Sperrungen;
Bewerten jeder Zeile (42) dahingehend, ob die Prädikate der Auswahlanweisung auf die Zeile zutreffen, und Fortsetzen der Suche, wenn die Prädikate der Anweisung nicht auf die Zeile zutreffen;
Anfordern einer Sperrung (43), wenn die Prädikate der Auswahlanweisung auf die Zeile zutreffen;
Unterbrechen der Suche (46), wenn eine Sperrung verweigert wird;
Wiederholen der Anforderung einer Sperrung und erneutes Bewerten der Zeile (48), wenn die Sperrung zugelassen wird; und
Zurückgeben der Zeile als Bestandteil der Ergebnisgruppe (45), wenn die Prädikate der Anweisung immer noch auf die Zeile zutreffen, sowie Aufheben der Sperrung, Überspringen der Zeile und Fortsetzen der Suche, wenn die Prädikate der Auswahlanweisung nicht mehr der Zeile entsprechen.

## Revendications

1. Procédé destiné à réduire les conflits d'accès de transactions en langage SQL simultanées sur les lignes d'une table dans un système de base de données relationnelle qui utilise des niveaux d'isolement de lectures engagées afin de produire des ensembles en réponse à une instruction en langage SQL présentant un ensemble de prédicats,
comprenant les étapes consistant à :
explorer toutes les lignes de la table dans une plage d'accès déterminée par l'instruction (41), et renvoyer les lignes engagées qui satisfont les prédicats de l'instruction,
**caractérisé par** l'étape consistant à évaluer chaque ligne explorée indépendamment du fait qu'elle présente un état engagé ou non engagé et en ignorant un verrou en attente.

2. Procédé selon la revendication 1, comprenant les étapes consistant à :
explorer la table en accédant aux lignes de la table avec une sémantique de lecture non engagée indépendamment des verrous en cours (41),
évaluer chaque ligne pour déterminer si elle satisfait les prédicats de l'instruction sélectionnée (42) et continuer l'exploration si la ligne ne satisfait pas les prédicats de l'instruction,
demander un verrou si la ligne satisfait les prédicats de l'instruction sélectionnée (43),
suspendre l'exploration, si un verrou est refusé (46),
répéter la demande de verrou et réévaluer la ligne si le verrou est autorisé (47, 48),
si la ligne satisfait encore les prédicats de l'instruction, la renvoyer en tant qu'ensemble de résultats (45) et si elle ne satisfait plus les prédicats de l'instruction sélectionnée, libérer le verrou, sauter la ligne et continuer l'exploration.

3. Dispositif destiné à réduire un conflit d'accès de transactions en langage SQL simultanées sur les lignes d'une table (32) dans un système de base de données relationnelle (30) qui utilise des niveaux d'isolement de lectures engagées afin de produire des ensembles de résultats en réponse à une instruction en langage SQL comportant un ensemble de prédicats, comprenant :
un moyen (31) destiné à explorer toutes les lignes de la table (32) dans une plage d'accès déterminée par l'instruction, et un moyen (35) destiné à renvoyer seulement les lignes engagées qui satisfont les prédicats de l'instruction,
**caractérisé par** un moyen (38) destiné à évaluer chaque ligne explorée indépendamment du fait qu'elle présente un état engagé ou non engagé et en ignorant un verrou en attente.

4. Dispositif selon la revendication 3, comprenant
un moyen (31) destiné explorer la table en accédant aux lignes de la table (32) avec une sémantique de lecture non engagée indépendamment de verrous en cours,
un moyen (36, 41) destiné évaluer pour chaque ligne si elle satisfait les prédicats de l'instruction et destiné à poursuivre l'exploration si la ligne ne satisfait pas les prédicats de l'instruction,
un moyen (43) destiné à demander un verrou si la ligne satisfait les prédicats de l'instruction,
un moyen destiné à suspendre (44, 46) l'exploration, si un verrou est refusé, et destiné à répéter la demande d'un verrou et à réexaminer la ligne après que le verrou est autorisé,
un moyen (35, 45) destiné à renvoyer la ligne sous forme d'ensemble de résultats, si la ligne satisfait encore les prédicats de l'instruction et un moyen destiné à libérer le verrou, à sauter la ligne et à poursuivre l'exploration, si la ligne ne satisfait plus les prédicats de l'instruction sélectionnée.

5. Produit de programme mémorisé sur un support de données lisible par une machine destiné à réduire un conflit d'accès de transactions en langage SQL simultanées sur les lignes d'une table (32) dans un système de base de données relationnelle (30) qui utilise des niveaux d'isolement de lectures engagées afin de produire des ensembles de résultats en réponse à une instruction en langage SQL, comprenant les étapes consistant à :
explorer toutes les lignes de la table dans une plage d'accès déterminée par l'instruction (41) renvoyer les lignes engagées qui satisfont les prédicats de l'instruction,
**caractérisé par** l'étape consistant à évaluer chaque ligne explorée indépendamment du fait qu'elle a un état engagé ou non engagé et à ignorer un verrou en cours.

6. Produit de programme selon la revendication 5, comprenant les étapes consistant à :
explorer la table en accédant aux lignes de la table présentant une sémantique de lecture non engagée, indépendamment des verrous en cours (41),
évaluer pour chaque ligne si elle satisfait les prédicats de l'instruction sélectionnée et poursuivre l'exploration si la ligne ne satisfait pas les prédicats de l'instruction (42),
demander un verrou si la ligne satisfait les prédicats de l'instruction sélectionnée (43),
suspendre l'exploration si le verrou est refusé (46),
répéter la demande de verrou et réévaluer la ligne si le verrou est autorisé (48), et
si la ligne satisfait encore les prédicats de l'instruction, la renvoyer en tant qu'ensemble de résultats (45) et si elle ne satisfait plus les prédicats de l'instruction sélectionnée, libérer le verrou, sauter la ligne et continuer l'exploration.
